(19) Europäisches Patentamt / European Patent Office / Office européen des brevets

(11) **EP 4 302 378 B1**

(12) **FASCICULE DE BREVET EUROPEEN**

(45) Date de publication et mention de la délivrance du brevet:
**07.05.2025 Bulletin 2025/19**

(21) Numéro de dépôt: **23712885.5**

(22) Date de dépôt: **20.03.2023**

(51) Classification Internationale des Brevets (IPC):
*H02J 3/14* ^(2006.01)    *H02J 13/00* ^(2006.01)

(52) Classification Coopérative des Brevets (CPC):
**H02J 3/14; H02J 13/00002;** H02J 2203/10; H02J 2310/58

(86) Numéro de dépôt international:
**PCT/EP2023/057103**

(87) Numéro de publication internationale:
**WO 2023/180262 (28.09.2023 Gazette 2023/39)**

(54) **PROCEDE ET DISPOSITF DE CONTROLE D'UN RESEAU ELECTRIQUE**

VERFAHREN UND VORRICHTUNG ZUR STEUERUNG EINES STROMNETZES

METHOD AND DEVICE FOR CONTROLLING AN ELECTRIC GRID

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.03.2022 FR 2202539**

(43) Date de publication de la demande:
**10.01.2024 Bulletin 2024/02**

(73) Titulaire: **Kensaas**
**86280 Saint-Benoît (FR)**

(72) Inventeur: **LE HETET, Bernard**
**29300 Quimperlé (FR)**

(74) Mandataire: **Alatis**
**3, rue Paul Escudier**
**75009 Paris (FR)**

(56) Documents cités:
JP-A- 2001 103 669    US-A1- 2015 112 501
US-A1- 2019 379 237

## Description

## DOMAINE TECHNIQUE DE L'INVENTION

L'invention concerne le domaine général des réseaux électriques de distribution, en particulier la surveillance de l'imminence d'un déséquilibre d'un réseau électrique.

L'invention se rapporte plus spécifiquement à un procédé de contrôle d'un point de consommation du réseau électrique qui, à partir d'une estimation des variables représentatives de l'état d'équilibre du réseau électrique au niveau de ce point de consommation, permet en temps réel de réduire ou augmenter temporairement la consommation du point de consommation. L'invention porte également sur un dispositif capable de mettre en œuvre un tel procédé. L'invention propose donc un algorithme de pilotage temps réel de l'équilibre d'un réseau électrique interconnecté par l'adaptation instantanée de la charge d'un point de consommation, en vue d'optimiser les services système fréquence (réserves primaires, secondaires et tertiaires) avec effet anti-blackout permanent.

## ETAT DE LA TECHNIQUE ANTERIEURE

Pour assurer la stabilité et la fiabilité d'un réseau électrique auquel sont connectés des producteurs d'énergie et des consommateurs d'énergie, il faut évidemment équilibrer en permanence la puissance électrique consommée par les consommateurs avec celle produite par les producteurs. Tout changement brusque de production ou de consommation entraîne un déséquilibre pouvant induire une instabilité de la fréquence et de la tension du réseau électrique par rapport à leur valeur nominale (par exemple 50Hz et 230V pour le réseau alternatif public). De telles instabilités de fréquence et tension ne sont pas acceptables car elles peuvent gravement endommager des équipements raccordés au réseau électrique ainsi que des lignes électriques de transport et de distribution. C'est pour les protéger en cas d'instabilité du réseau que des postes source haute tension doivent être déconnectés ce qui peut entrainer ainsi des coupures en cascade menant à un effondrement local ou général du réseau électrique, appelé aussi black-out.

Un gestionnaire de réseau électrique (appelé aussi parfois un opérateur de réseau) est une entité qui a pour mission de surveiller l'état du réseau électrique de telle sorte que tous les utilisateurs raccordés au réseau électrique aient la garantie d'être alimentés avec une fréquence et une tension dans des plages de fonctionnement normalisées, précisés notamment dans la norme européenne EN 50160 pour les caractéristiques de l'onde électrique (tension, fréquence,...) fournie par les réseaux publics de distribution.

En fonction des demandes de consommation, le gestionnaire de réseau est en permanence capable d'activer/désactiver des producteurs d'énergie. Lorsqu'une surcharge, c'est-à-dire un surcroit de consommation par rapport à la production, est prévisible dans le temps (liée par exemple à des prévisions météorologiques indiquant une baisse prochaine de températures ou à une utilisation importante d'appareils ménagers en fin de journée), le gestionnaire peut prévoir par exemple le lancement d'une tranche de centrale électrique supplémentaire ou l'activation d'une ou plusieurs sources d'énergie renouvelable, par exemple un barrage hydroélectrique, pour absorber cette surcharge. Par contre, lorsqu'une surcharge survient soudainement ou lorsqu'aucune source d'énergie n'est rapidement disponible, des automates de réseau peuvent délester une partie du réseau électrique, notamment en coupant temporairement des gros consommateurs industriels d'énergie électrique présélectionnés (tels que par exemple des sidérurgies, papeteries, raffineries...) et certains départs moyenne tension (MT ou HTA Haute Tension A) de postes source pour rééquilibrer le réseau, tout en évitant de couper des consommateurs sensibles (tels que des hôpitaux, centres de données...). Le gestionnaire peut également, via des interconnections de réseaux avec les pays ou régions voisins, choisir d'importer une quantité d'électricité pendant ces périodes de pointe, mais cette possibilité présente un coût élevé pour le gestionnaire car l'énergie est alors achetée au prix fort. Inversement, en cas de sous-charge ou surproduction soudaine, le gestionnaire peut également, via les interconnections de réseaux, choisir d'exporter une quantité d'électricité pendant ces périodes.

De façon connue, le gestionnaire du réseau électrique dispose d'un système central de supervision et de téléconduite de type SCADA (Supervisory Control and Data Acquisition) qui effectue en temps réel de nombreuses mesures de paramètres du réseau électrique pour détecter d'éventuels déséquilibres et pour commander à distance, en cas de surcharge soudaine, la déconnexion très rapide (c'est-à-dire avec un délai de l'ordre de la seconde) de quelques installations électriques ciblées qui sont en communication permanente avec le système central du gestionnaire.

Pour des raisons d'efficacité, ces installations électriques ciblées sont des gros consommateurs d'énergie électrique (appelant par exemple de l'ordre de plusieurs mégawatts) car leur déconnexion temporaire du réseau électrique permet de générer de grosses réductions de consommation. Mais cette solution ne peut s'appliquer qu'à un nombre limité d'installations, et de plus elle peut s'avérer pénalisante pour la productivité de ces installations et présenter un coût élevé pour le gestionnaire en termes de dédommagement.

Il serait donc avantageux de pouvoir disposer d'une solution décentralisée qui permette, plutôt que de couper quelques gros consommateurs ciblés à partir d'un système central, de pouvoir déconnecter temporairement une quantité beaucoup plus importante de petits consommateurs d'énergie (par exemple une partie du chauffage chez des particuliers). On obtient en effet une même réduction de consommation globale d'électricité de par exemple 100MW en coupant 1kW chez 100 000 petits consommateurs, plutôt que 10MW chez 10 gros consommateurs.

Néanmoins, dans une telle solution décentralisée, il n'est pas réaliste pour des raisons de coût et de faisabilité que tous ces nombreux petits consommateurs disposent d'une communication permanente temps réel avec un système distant de commande du gestionnaire de réseau, dans l'attente par exemple d'un ordre de déconnexion rapide venant de ce système.

Le document JP2001103669A décrit une solution permettant de mesurer les variations de différentes variables électriques de façon estimer le déséquilibre entre demande et offre au niveau de chaque poste électrique à surveiller. Le document US2019379237A1 décrit une solution pour contrôler la fréquence d'un réseau électrique en calculant les variations de fréquence sur des prises intelligentes de façon à piloter localement ces prises en comparant la fréquence calculée avec un seuil envoyé depuis un poste distant. De même, dans le document US2015112501A1, chaque charge électrique détecte une variation de fréquence d'un réseau électrique et est capable de réduire ou augmenter sa consommation d'énergie en conséquence, en fonction de critères reçus préalablement d'un système central.

**EXPOSE DE L'INVENTION**

C'est pourquoi l'invention vise à remédier à tout ou partie de ces inconvénients en proposant une solution où chaque consommateur raccordé au réseau de distribution possède localement un système autonome qui est capable de détecter en temps réel l'imminence d'un déséquilibre du réseau électrique et qui est capable d'effectuer avec une très grande réactivité (de l'ordre de la seconde) une modification (c'est-à-dire une diminution en cas de surconsommation ou une augmentation en cas de surproduction) temporaire de la puissance appelée par ce consommateur.

Cette solution sera plus économique pour le gestionnaire de réseau et fera moins appel aux gros consommateurs d'énergie ciblés. De plus, elle sera plus réactive pour éviter un déséquilibre, car le temps nécessaire pour une modification de puissance appelée pour un nombre important de N petits consommateurs autonomes de 1kW à 10kW est inférieur à celui nécessaire pour une modification de puissance pour quelques gros consommateurs de 10MW par exemple. De même, le temps de remise en marche de N petits consommateurs sera inférieur à celui des gros consommateurs et surtout moins perturbant pour l'ensemble du réseau.

Pour cela, l'invention décrit un procédé de contrôle d'un réseau électrique de distribution en un point de consommation dudit réseau électrique, le point de consommation pouvant piloter une charge électrique reliée au réseau électrique, caractérisé en ce que le procédé comporte une étape de mesure de tensions électriques au point de consommation, une étape d'estimation, au niveau dudit point de consommation, de variables représentatives d'un état d'équilibre du réseau électrique à partir desdites tensions électriques mesurées, lesdites variables représentatives comprenant la fréquence f et la variation temporelle de fréquence df/dt du réseau électrique ainsi que la différence ΔP entre la puissance électrique produite et la puissance électrique consommée dans le réseau électrique, et une étape de commande durant laquelle la consommation électrique de la charge électrique est modifiée lorsque lesdites variables représentatives estimées sont en dehors d'un domaine de fonctionnement prédéterminé.

Selon une caractéristique, l'étape d'estimation effectue d'abord une estimation de la fréquence f du réseau électrique à partir des tensions mesurées au point de consommation, et une estimation de la variation de fréquence df/dt du réseau électrique.

Selon une autre caractéristique, l'estimation de la fréquence utilise un filtre de Kalman étendu et l'estimation de la variation de fréquence utilise aussi un filtre de Kalman étendu. Selon une autre caractéristique, l'estimation de la fréquence utilise un filtre de Kalman étendu en redondance avec un système du type boucle à verrouillage de phase.

Selon une autre caractéristique, l'étape d'estimation effectue aussi en temps réel une estimation de la différence ΔP entre puissance électrique produite et puissance électrique consommée, en utilisant un filtre de Kalman étendu, dont une des variables d'état est un paramètre de calibration α représentant l'inertie du réseau électrique.

Selon une autre caractéristique, le procédé de contrôle comporte une étape de recalibration périodique durant laquelle le paramètre de calibration α est mis à jour périodiquement par une communication entre le point de consommation et un gestionnaire du réseau électrique.

Selon une autre caractéristique, le domaine de fonctionnement prédéterminé est identifié par des seuils pour les variables représentatives de l'état d'équilibre du réseau, lesdits seuils étant mis à jour durant l'étape de recalibration périodique. Selon une autre caractéristique, lesdits seuils sont interdépendants entre eux.

Selon une autre caractéristique, durant l'étape de commande, la consommation électrique de la charge électrique est réduite lorsque les variables représentatives de l'état d'équilibre sont en-dessous du domaine de fonctionnement prédéterminé et la consommation électrique de la charge électrique est augmentée lorsque les variables représentatives de l'état d'équilibre sont au-dessus du domaine de fonctionnement prédéterminé.

Selon une autre caractéristique, durant l'étape de recalibration, une information de prévision d'écart entre puissance produite et puissance consommée ΔP_prévu est fournie par le gestionnaire de réseau et est utilisée dans l'étape de commande pour déterminer le domaine de fonctionnement prédéterminé.

L'invention décrit également un dispositif de contrôle d'un réseau électrique de distribution intégré dans un point de consommation dudit réseau électrique, caractérisé en ce le dispositif comporte des moyens de mesure de tensions électriques au point de consommation, une unité de calcul pour estimer des variables représentatives d'un état d'équilibre du réseau électrique et des moyens de commande d'une charge électrique commandée par le point de consommation, dans le but de mettre en œuvre ledit procédé de contrôle.

Selon une caractéristique, le dispositif comporte également des moyens de communication, pour faire communiquer, via une plateforme d'Internet des Objets ou IoT (Internet of Things), le point de consommation avec un gestionnaire du réseau électrique, et selon une autre caractéristique, le dispositif est intégré dans un compteur électrique communicant.

## BREVE DESCRIPTION DES FIGURES

D'autres caractéristiques et avantages de l'invention ressortiront à la lecture de la description qui suit, en référence aux figures annexées dans lesquelles :

[Fig. 1] : la figure 1 montre un schéma simplifié d'un dispositif capable de mettre en œuvre un procédé de contrôle conforme à l'invention,

[Fig. 2] : la figure 2 représente une vue schématique simplifiée du procédé de contrôle conforme à l'invention.

## DESCRIPTION DETAILLEE D'UN MODE DE REALISATION

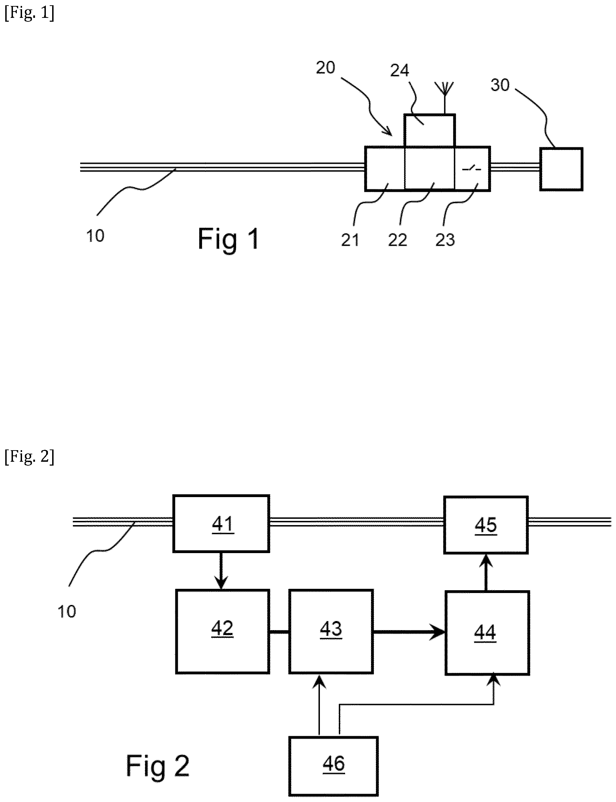

En référence à la figure 1, un réseau électrique alternatif de distribution est schématisé par la référence 10. Le réseau électrique 10 comporte évidemment de très nombreux points de consommation. La figure 1 montre un point de consommation 20 qui commande une charge électrique 30 alimentée par le réseau électrique 10. Le réseau électrique 10 peut être un réseau alternatif monophasé ou polyphasé.

Le point de consommation 20 peut par exemple se situer directement au niveau d'une prise, d'un disjoncteur ou d'un câble électrique alimentant une charge électrique 30 quelconque telle qu'un circuit de chauffage électrique dans une habitation, une borne de recharge de véhicule électrique (publique ou résidentielle), une ligne de production industrielle, ou autres (cas d'un groupe électrogène de secours ou cas d'un dispositif de type V2G (Vehicle to Grid)). Mais le point de consommation 20 peut également se situer au niveau d'un compteur électrique communicant, tel que le compteur principal d'une habitation individuelle (par exemple un compteur de type Linky en France), capable de piloter différentes charges de cette habitation, ou même d'un compteur électrique de prépaiement ou un compteur divisionnaire. D'autres cas d'usage pour le point de consommation 20 sont bien entendu envisageables.

Dans le mode de réalisation présenté, le point de consommation 20 intègre un dispositif de contrôle capable de mettre en œuvre le procédé de contrôle décrit plus loin. Ce dispositif de contrôle comporte des moyens de mesure 21 des tensions électriques présentes au niveau du point de consommation 20. Si le réseau électrique 10 est monophasé, les moyens de mesure 21 mesurent la tension phase-neutre et si le réseau électrique 10 est polyphasé, les moyens de mesure 21 mesurent alors les tensions entre phases ou entre phases-neutre. Le dispositif de contrôle du point de consommation 20 comporte aussi des moyens de commande 23 capables de piloter l'alimentation de la charge électrique 30.

De plus, le dispositif de contrôle comporte une unité de calcul 22 comprenant un microcontrôleur et une mémoire, le microcontrôleur étant capable de dérouler un programme stocké dans cette mémoire. L'unité de calcul 22 est capable de lire les informations venant des moyens de mesure 21, par exemple au travers d'un convertisseur analogique-numérique (CAN ou ADC en anglais), et de piloter les moyens de commande 23. Ces moyens de commande 23 sont par exemple un organe de coupure de type contacteur ou relais dans des cas simples, mais aussi une commande analogique ou par bus numérique de liaison pour piloter des charges 30 plus complexes.

Le dispositif de contrôle du peut comporter par ailleurs des moyens de communication 24, par exemple de type RF (Radio Fréquence), tels que Wifi, 5G, Bluetooth, Lora..., ou de type CPL (Courant Porteur de Ligne), lui permettant de communiquer avec l'extérieur via internet. Grâce aux moyens de communication 24, le point de consommation 20 est en particulier capable de communiquer via une plateforme IoT (Internet of Things) avec un gestionnaire de transport ou de distribution du réseau électrique (RTE ou Enedis en France).

Selon l'invention, l'unité de calcul 22 du point de consommation 20 mémorise et exécute un programme capable de mettre en œuvre les différentes étapes du procédé décrites ci-après et représentées en figure 2.

Le procédé de contrôle comporte une première étape 41 d'acquisition d'échantillons des tensions mesurées au point de consommation 20 par les moyens de mesure 21. La fréquence d'échantillonnage de ces mesures doit être élevée pour avoir une précision suffisante des variations de tension que l'on cherche à déterminer. Un échantillonnage des mesures de l'ordre de plusieurs kHz est nécessaire (par exemple 2 ou 4kHz). Cette étape 41, appelée étape de mesure, comprend donc une phase d'observation physique des tensions électriques puis une phase de conversion en valeurs numériques.

À partir des tensions électriques mesurées, le procédé de contrôle comporte ensuite une étape d'estimation 42, 43 permettant de déterminer des variables qui sont représentatives de l'état d'équilibre du réseau électrique 10. Ces variables représentatives comprennent la fréquence f du réseau électrique et sa variation temporelle df/dt (appelée aussi ROCOF - Rate of Change of Frequency), ainsi que la différence $\Delta P$ entre puissance électrique totale produite et puissance électrique totale consommée sur le réseau électrique. À cet égard, l'étape d'estimation est composée d'un premier bloc estimateur 42 de la fréquence et de la variation de fréquence, et d'un deuxième bloc estimateur 43 de l'état du réseau.

Le bloc estimateur de fréquence 42 calcule de façon très précise la fréquence $f_{estimé}$ et la variation de fréquence $df/dt_{estimé}$ du réseau électrique 10 à partir des tensions mesurées durant l'étape 41. L'estimation de la fréquence est faite avec une précision meilleure que 1 mHz et l'estimation de la variation de fréquence est faite avec une précision meilleure que 10 mHz/s.

Pour estimer la fréquence f, le bloc estimateur de fréquence 42 peut utiliser un filtre de Kalman étendu (ou Extended Kalman Filter - EKF) après une transformation des tensions mesurées en écriture complexe. Une autre solution consiste à utiliser un système du type boucle à verrouillage de phase (ou PLL, en anglais phase-locked loop). La solution avec un filtre de Kalman privilégie plutôt la rapidité d'obtention du résultat alors que la solution avec un système PLL privilégie plutôt la précision du résultat. Le bloc estimateur de fréquence 42 peut aussi combiner avantageusement ces deux solutions de façon redondante, ce qui permet en particulier de pouvoir recalibrer régulièrement plus facilement les paramètres du filtre de Kalman à l'aide du système PLL. Le bloc estimateur de fréquence 42 calcule également la variation de fréquence df/dt à l'aide d'un filtre de Kalman étendu.

Une fois la fréquence f et la variation de fréquence df/dt acquises dans le bloc 42, le bloc estimateur de l'état du réseau 43 est en charge d'estimer en temps réel la différence $\Delta P_{estimé}$ entre puissance électrique produite et puissance électrique consommée. Ce bloc estimateur 43 se base sur un modèle physique comprenant les quatre variables d'état suivantes : i) la fréquence f du réseau électrique, ii) la dérivée de la fréquence par rapport au temps df/dt, iii) la différence $\Delta P$ entre puissance produite et puissance consommée, et iv) une variable d'état appelée $\alpha$ qui est un paramètre de calibration représentant l'inertie du réseau électrique 10. Ce paramètre de calibration $\alpha$ est donné par l'équation suivante :

$$\alpha = 2.H.S_n/f_0$$

dans laquelle : i) $f_0$ représente la fréquence nominale du réseau électrique (par exemple 50 Hz en Europe), ii) H représente la constante d'inertie, qui est le temps de réponse en secondes de toutes les machines tournantes synchronisées (à savoir turbines et alternateurs, à l'exception notable des éoliennes) du réseau électrique interconnecté suite à une impulsion d'appel de puissance du réseau, et iii) $S_n$ représente la puissance nominale de toutes les machines tournantes synchronisées du réseau électrique.

L'équation du modèle physique utilisé étant basée sur une équation universelle des réseaux électriques interconnectés qui est :

$$\frac{df}{dt} = f_0 \cdot \frac{\Delta P}{2.H.S_n}$$

on obtient alors l'équation suivante pour estimer la différence entre puissance totale produite et puissance totale consommée :

$$\Delta P = \alpha \cdot \frac{df}{dt}$$

On voit que plus H et $S_n$ sont élevées, c'est-à-dire plus la puissance nominale du réseau et le temps de réponse sont élevés, plus le paramètre de calibration $\alpha$ représentant l'inertie du réseau électrique 10 est élevé, et donc plus la variation de fréquence df/dt est faible, ce qui signifie que le réseau électrique 10 possède une grande inertie et est stable. Inversement, des valeurs plus basses de H et $S_n$ donnent une valeur plus basse du paramètre de calibration $\alpha$ indiquant que le réseau électrique 10 est moins stable. Ainsi, un réseau électrique comportant par exemple un grand nombre d'éoliennes comme sources d'énergie, aura une valeur faible du paramètre de calibration $\alpha$ (car H est faible), et donc un risque de black-out plus important, ce qui renforce l'utilité de la présente invention.

Le bloc estimateur de l'état du réseau 43 utilise lui aussi un filtre de Kalman étendu pour estimer ces quatre variables d'état que sont f, df/dt, $\Delta P$ et $\alpha$. Les conditions initiales du filtre peuvent être les suivantes : la variable d'état f est égale à la fréquence nominale $f_0$, la dérivée df/dt et la différence $\Delta P$ sont égales à 0, le paramètre de calibration $\alpha$ est égal à une valeur initiale $\alpha_0$.

Selon une variante simplifiée de l'invention, le paramètre de calibration $\alpha$ est une donnée interne fixe, qui est fonction de l'étendue et de la configuration du réseau, car on considère que les variations de configuration du réseau électrique 10 sont minimes (cas par exemple d'un réseau électrique basique non interconnecté). On pourrait aussi envisager d'avoir plusieurs valeurs fixes du paramètre de calibration $\alpha$, tel qu'une valeur moyenne comprise entre une valeur maxi et une valeur mini. Dans ces différents cas, ce ou ces paramètres de calibration $\alpha$ sont directement mémorisés dans la mémoire de l'unité de calcul 22.

Selon une variante plus élaborée, le paramètre de calibration $\alpha$ est susceptible de varier suite notamment à d'éventuels changements importants de la puissance injectée dans le réseau par des sources d'énergie non-synchronisées (en particulier les éoliennes), ou d'interconnexions avec d'autres réseaux électriques. Il est donc alors préférable d'avoir une mise à jour régulière du paramètre de calibration α pour obtenir une meilleure précision des calculs. C'est pourquoi le procédé de contrôle comporte une étape de recalibration périodique 46 qui fournit une mise à jour périodique du paramètre de calibration α (typiquement une fois toutes les dix minutes par exemple). Les moyens de communication 24 du point de consommation 20 permettent en effet de communiquer avec un gestionnaire de réseau qui a la charge de diffuser régulièrement une valeur à jour du paramètre de calibration α, par exemple via une plateforme IoT. De plus, à partir de la valeur de α ainsi rafraîchie périodiquement, le bloc estimateur de l'état du réseau 43 évalue en temps réel les fluctuations δα de α afin de recaler l'équation

$$\Delta P = (\alpha + \delta\alpha).\frac{df}{dt}$$

de manière à détecter ainsi une éventuelle évolution sensible de l'inertie du réseau entre deux recalibrations périodiques (perte de ligne, évolution des interconnexions, ilotage, intermittence des énergies renouvelables...).

Une fois que la fréquence f, la variation de fréquence df/dt et la différence ΔP entre puissance produite et puissance consommée sont estimées, le procédé de contrôle comporte ensuite une étape de commande 44 dans laquelle ces variables représentatives de l'état d'équilibre du réseau 10 sont analysées par rapport à un domaine de fonctionnement prédéterminé, pour savoir s'il y a ou non un déséquilibre de l'état du réseau et donc s'il faut ou non réduire ou augmenter temporairement la puissance appelée par la charge 30 raccordée au point de consommation 20, jusqu'à ce que les conditions de ce domaine de fonctionnement prédéterminé soient rétablies.

Selon un premier mode de réalisation complètement autonome, le domaine de fonctionnement prédéterminé est simplement composé de seuils limites hauts ($f_{seuil\ haut}$, $df/dt_{seuil\ haut}$, $\Delta P_{seuil\ haut}$) et bas ($f_{seuil\ bas}$, $df/dt_{seuil\ bas}$, $\Delta P_{seuil\ bas}$) qui ne doivent pas être franchis. Ces seuils fixes sont mémorisés dans la mémoire de l'unité de calcul 22.

Selon un deuxième mode de réalisation, les seuils sont variables et peuvent ainsi être mis à jour périodiquement grâce à un dialogue entre les moyens de communication 24 et le gestionnaire de réseau, durant l'étape de recalibration périodique 46. Comme pour la mise à jour du paramètre de calibration α, une période de mise à jour de l'ordre de dix minutes pour les seuils est suffisante.

Dans ces deux premiers modes de réalisation, l'étape de commande 44 effectue ainsi en permanence un test pour savoir si la valeur d'une des variables estimées à savoir : $f_{estimé}$, $df/dt_{estimé}$ ou $\Delta P_{estimé}$ se situe en-dessous ou au-dessus des seuils correspondants.

Par exemple, si $f_{estimé} < f_{seuil\ bas}$ ou si $df/dt_{estimé} < df/dt_{seuil\ bas}$ ou si $\Delta P_{estimé} < \Delta P_{seuil\ bas}$, ça signifie qu'au moins une des variables estimées est en-dessous du domaine de fonctionnement, on considère alors qu'il y a un risque imminent de déséquilibre du réseau dû à une surconsommation et donc l'étape de commande 44 demande à un bloc de commande 45 d'effectuer une réduction de la consommation de la charge 30. Inversement, si $f_{estimé} > f_{seuil\ haut}$ ou si $df/dt_{estimé} > df/dt_{seuil\ haut}$ ou Si $\Delta P_{estimé} > \Delta P_{seuil\ haut}$, ça signifie qu'au moins une des variables estimées est au-dessus du domaine de fonctionnement, on considère alors qu'il y a un risque imminent de déséquilibre du réseau dû à une sous-consommation (ou une surproduction) et donc l'étape de commande 44 demande au bloc de commande 45 d'effectuer une augmentation de la consommation de la charge 30. Dans le cas d'une surproduction, on peut aussi envisager une diminution de la production en commandant l'arrêt d'un groupe électrogène si le cas se présente.

Selon un autre mode de réalisation, les seuils du domaine de fonctionnement des trois variables f, df/dt, ΔP sont interdépendants entre eux, c'est-à-dire qu'ils peuvent être liés entre eux par une ou plusieurs fonctions. On peut ainsi notamment utiliser la technique dite du plan de phase qui est applicable à un système non-linéaire du second ordre. Le plan de phase donne le tracé d'un point X(t) dont les coordonnées en abscisse et en ordonnée sont les valeurs que prennent les deux variables d'états que sont la fréquence f(t) et la différence de puissance ΔP(t). Une telle méthode permet d'obtenir un domaine de fonctionnement qui soit mieux affiné.

Selon un autre mode de réalisation plus complexe, le domaine de fonctionnement des trois variables f, df/dt, ΔP est estimé par l'unité de calcul 22 grâce à un réseau de neurones convolutif dont les réglages d'apprentissage ont été transmis par le gestionnaire de réseau. Cela permet d'augmenter l'autonomie du dispositif de contrôle du point de consommation 20, en espaçant les mises à jour périodiques du gestionnaire de réseau ou même dans un mode dégradé où les communications par les moyens de communication 24 ne sont pas opérationnelles.

Dans un autre mode de réalisation avantageux, l'invention peut servir à éviter d'avoir à recourir aux réserves d'énergie dites "secondaires" (telles que par exemple des barrages hydroélectriques, etc...), grâce à un calcul plus élaboré des seuils de ΔP.

En effet, il est connu que le réseau électrique 10 comporte des réserves d'énergie dites "primaires". Ces réserves primaires s'activent automatiquement en faisant simplement varier la puissance produite par les machines tournantes synchrones du réseau électrique, grâce à une variation de la vitesse de rotation de leurs turbines. Cette variation de puissance notée δ**P** est alors

donnée par la relation :

$$\delta P = -\lambda.(f_{estimé} - f_0)$$

dans laquelle : i) $f_0$ est la fréquence nominale du réseau et ii) $\lambda$ est un coefficient qui est environ égal à : $\delta P_{max}/|\delta f_{max}|$, où $\delta P_{max}$ représente l'ensemble des réserves primaires préétablies existantes et $\delta f_{max}$ représente l'écart de fréquence maximal autorisé par rapport à la fréquence nominale $f_0$. En France, le total des réserves primaires $\delta P_{max}$ est égal à environ 600 MW et l'écart de fréquence maximal $\delta f_{max}$ autorisé est réglé à environ 50mHz.

Si les réserves primaires ne suffisent pas pour ramener la fréquence réelle du réseau à la fréquence nominale de 50 Hz, le gestionnaire de réseau active alors les réserves secondaires, voire tertiaires et/ou opère des effacements de pointe préprogrammés, mais avec un délai d'exécution allant de plusieurs dizaines de secondes à plusieurs minutes suivant le type de réserve. Dans un tel cas, l'invention, qui réagit typiquement à la seconde, peut alors être utilisée en anticipation pour essayer d'éviter l'activation de ces réserves, ce qui serait avantageux pour le gestionnaire de réseau. Le point de consommation 20 se comporterait alors comme une sorte de réserve primaire additionnelle temporaire car il peut réagir de façon autonome très dynamiquement (typiquement 1 seconde).

Si les réserves primaires ne suffisent pas pour ramener la fréquence réelle du réseau à la fréquence nominale, les gestionnaires de réseau disposent d'un système dit "d'effacement de pointe". Ces systèmes d'effacement consistent à programmer à distance et à l'avance (c'est-à-dire avec une avance supérieure à 10mn), le délestage de différents consommateurs pour une durée prédéterminée en fonction d'une prévision horodatée de consommation. L'inconvénient étant que ces délestages programmés à l'avance sont souvent activés alors que ce n'était pas nécessaire car ΔP n'atteint pas la valeur qui était prévue et qui justifiait un délestage. Dans un tel cas, l'invention peut alors être utilisée pour compenser une erreur de consigne de délestage et éviter ainsi d'éviter un effacement non nécessaire.

Pour cela, l'invention utilise une information de prévision d'écart entre puissance produite et puissance consommée, nommée $\Delta P_{prévu}$, qui est fournie par le gestionnaire de réseau par exemple durant l'étape de recalibration 46. Cette information $\Delta P_{prévu}$ donne les prévisions d'écart entre puissance produite et puissance consommée à venir sur les prochaines heures. On peut envisager par exemple une prévision de $\Delta P_{prévu}$ qui soit échantillonnée toutes les 10 secondes, ce qui fait soixante valeurs de $\Delta P_{prévu}$ à recevoir de façon glissante toutes les dix minutes par les moyens de communication 24. D'autres fréquences d'échantillonnage de l'information de prévision d'écart $\Delta P_{prévu}$ sont évidemment possibles. Dans ce cas, l'expression $\lambda.(f_{estimé} - f_0) + \Delta P_{prévu}$ peut être utilisée comme une référence de seuil du domaine de fonctionnement prédéterminé, afin de détecter si l'on se trouve en dehors du domaine de fonctionnement. L'étape de commande 44 effectue alors la fonctionnalité suivante :

a) Si $\lambda.(f_{estimé} - f_0) + \Delta P_{prévu} > \Delta P_{estimé}$, cela signifie que les réserves primaires seront suffisantes pour cette prévision d'écart de puissance $\Delta P_{prévu}$, sans l'aide de réserves secondaires, donc pas besoin de piloter une modification de la consommation électrique de la charge 30,

b) Si $\lambda.(f_{estimé} - f_0) + \Delta P_{prévu} < \Delta P_{estimé}$, cela signifie que les réserves primaires ne seront pas suffisantes dans le temps pour cette prévision de $\Delta P_{prévu}$, et donc que l'on va se trouver en-dessous du domaine de fonctionnement prédéterminé. Dans ce cas, pour éviter d'avoir recours à des réserves secondaires, l'étape de commande 44 pilote une réduction de la consommation électrique de la charge 30.

c) Si $\lambda.(f_{estimé} - f_0) + \Delta P_{prévu} \ll \Delta P_{estimé}$, cela signifie que les réserves primaires seront très insuffisantes dans le temps pour cette prévision de $\Delta P_{prévu}$, permettant de déduire l'imminence prochaine d'un blackout ce qui que les réserves secondaires et tertiaires pourraient alors ne pas se déclencher à temps pour contribuer à éviter ce blackout. Pour éviter cela, l'étape de commande 44 peut alors piloter rapidement une réduction importante de la consommation électrique de la charge 30.

Quand une réduction de consommation de la charge 30 est demandée durant l'étape de commande 44, le bloc de commande 45 peut le faire de différentes façons. Selon une première variante simple, le bloc de commande 45 arrête complètement la consommation en déconnectant la charge 30 du réseau 10, au moyen d'un organe de coupure 23 de type contacteur ou relais, ce qui revient évidemment à faire une réduction totale de 100% de la consommation de la charge 30 tant que les conditions du domaine de fonctionnement ne sont pas rétablies.

Selon une deuxième variante, bien adaptée par exemple à une charge 30 de type chauffage électrique, le bloc de commande 45 réduit temporairement la consommation en commandant un fonctionnement intermittent de la charge 30. Par exemple, si l'on veut réduire partiellement la consommation d'un facteur 50%, le bloc de commande 45 ordonne alternativement la déconnexion puis la reconnexion de la charge 30 sur de petites périodes de temps identiques, tant que les conditions du domaine de fonctionnement ne sont pas rétablies.

Selon une troisième variante, le bloc de commande 45 peut réduire la consommation du point de consommation 20 par d'autres moyens, par exemple en réduisant le courant consommé par la charge 30, ou, dans le cas où la charge 30 est un moteur électrique, en réduisant sa vitesse à l'aide d'une électronique de puissance.

Selon une quatrième variante, si le point de consommation 20 commande plusieurs charges électriques 30 (cas d'un compteur électrique d'habitation individuelle notamment), le bloc de commande 45 peut choisir de déconnecter du réseau 10 seulement certaines de ses charges non essentielles et pas d'autres.

D'autres variantes sont bien évidemment possibles pour réduire ou augmenter temporairement la consommation électrique à un point de consommation 20.

Lorsque les conditions du domaine de fonctionnement sont rétablies, il faut prendre garde à éviter de repartir en instabilité si de nombreuses charges 30 se reconnectent en même temps. Pour cela, différents moyens connus sont possibles pour échelonner le redémarrage des charges comme mettre en place une temporisation aléatoire individuelle de rétablissement pour chaque point de consommation 20.

Ainsi, grâce à l'invention, le dispositif de contrôle du point de consommation 20 peut fonctionner de façon autonome, à partir des seules mesures de tensions du réseau électrique 10, de variables estimées en temps réel à partir de ces mesures et de paramètres mémorisés localement au niveau du point de consommation 20. De cette façon le point de consommation 20 peut surveiller en temps réel l'imminence d'un risque de déséquilibre du réseau et peut décider de réduire temporairement la consommation des charges liées à ce point de consommation 20, de sorte que le réseau électrique 10 soit allégé et évite un potentiel black-out.

Quand une communication du point de consommation 20 avec le gestionnaire du réseau électrique est utilisée, cette communication se fait en bas débit puisqu'elle est principalement utilisée pour des mises à jour de paramètres avec une périodicité de l'ordre de quelques minutes seulement (paramètre de calibration $\alpha$, seuils du domaine de fonctionnement, prévisions d'écart de puissance $\Delta P_{prévu}$, etc...). Il est donc facile d'installer et d'exécuter le procédé de contrôle de l'invention dans de multiples points de consommation 20 du réseau 10, sans pour autant créer des contraintes de communication pour piloter ces différents points de consommation 20.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

**1.** Procédé de contrôle d'un réseau électrique (10) de distribution en un point de consommation (20) dudit réseau électrique (10), le point de consommation (20) pouvant piloter une charge électrique (30) reliée au réseau électrique (10), le procédé comportant :

- une étape de mesure (41) de tensions électriques au point de consommation (20),
- une étape d'estimation (42, 43) au niveau dudit point de consommation (20) de variables représentatives d'un état d'équilibre du réseau électrique (10) à partir desdites tensions électriques mesurées, lesdites variables représentatives comprenant la fréquence (f) et la variation temporelle de fréquence (df/dt) du réseau électrique ainsi que la différence ($\Delta P$) entre la puissance électrique produite et la puissance électrique consommée dans le réseau électrique, l'étape d'estimation (42) effectuant d'abord une estimation de la fréquence (f) du réseau électrique à partir des tensions mesurées au point de consommation, et une estimation de la variation de fréquence (df/dt) du réseau électrique (10),
- une étape de commande (44) durant laquelle la consommation électrique de la charge électrique (30) est modifiée lorsque lesdites variables représentatives estimées sont en dehors d'un domaine de fonctionnement prédéterminé,

**caractérisé en ce que** :

- l'étape d'estimation (43) effectue en temps réel une estimation de la différence ($\Delta P$) entre puissance électrique produite et puissance électrique consommée, en utilisant un filtre de Kalman étendu, dont une des variables d'état est un paramètre de calibration ($\alpha$) représentant l'inertie du réseau électrique (10),
- le procédé de contrôle comporte une étape de recalibration périodique (46) durant laquelle le paramètre de calibration ($\alpha$) est mis à jour périodiquement par une communication entre le point de consommation (20) et un gestionnaire du réseau électrique, et durant laquelle une information de prévision d'écart entre puissance produite et puissance consommée ($\Delta P_{prévu}$) est fournie par le gestionnaire de réseau et est utilisée dans l'étape de commande (44) pour déterminer le domaine de fonctionnement prédéterminé.

**2.** Procédé de contrôle selon la revendication 1, **caractérisé en ce que** l'estimation de la fréquence utilise un filtre de Kalman étendu et l'estimation de la variation de fréquence utilise aussi un filtre de Kalman étendu.

**3.** Procédé de contrôle selon la revendication 1, **caractérisé en ce que** l'estimation de la fréquence utilise un filtre de Kalman étendu en redondance avec un système du type boucle à verrouillage de phase.

4. Procédé de contrôle selon la revendication 1, **caractérisé en ce que** le domaine de fonctionnement prédéterminé est identifié par des seuils pour les variables représentatives de l'état d'équilibre du réseau, lesdits seuils étant mis à jour durant l'étape de recalibration périodique (46).

5. Procédé de contrôle selon la revendication 1, **caractérisé en ce que** le domaine de fonctionnement prédéterminé est identifié par des seuils pour les variables représentatives de l'état d'équilibre du réseau, lesdits seuils étant interdépendants entre eux.

6. Procédé de contrôle selon l'une quelconque des revendications 1 à 5, **caractérisé en ce que** durant l'étape de commande (44), la consommation électrique de la charge électrique (30) est réduite lorsque lesdites variables représentatives de l'état d'équilibre sont en-dessous du domaine de fonctionnement prédéterminé.

7. Procédé de contrôle selon la revendication 6, **caractérisé en ce que** durant l'étape de commande (44), la charge électrique (30) est déconnectée du réseau électrique (10) lorsque lesdites variables représentatives de l'état d'équilibre sont en-dessous du domaine de fonctionnement prédéterminée.

8. Procédé de contrôle selon l'une quelconque des revendications 1 à 5, **caractérisé en ce que** durant l'étape de commande (44), la consommation électrique de la charge électrique (30) est augmentée lorsque lesdites variables représentatives de l'état d'équilibre sont au-dessus du domaine de fonctionnement prédéterminé.

9. Dispositif de contrôle d'un réseau électrique (10) de distribution intégré dans un point de consommation (20) dudit réseau électrique (10), caractérisé en ce le dispositif comporte des moyens de mesure (21) de tensions électriques au point de consommation (20), une unité de calcul (22) pour estimer des variables représentatives d'un état d'équilibre du réseau électrique et des moyens de commande (23) d'une charge électrique (30) commandée par le point de consommation (20), dans le but de mettre en œuvre le procédé de contrôle selon l'une des revendications précédentes.

10. Dispositif de contrôle selon la revendication précédente, **caractérisé en ce que** le dispositif comporte également des moyens de communication (24), pour faire communiquer via une plateforme IoT le point de consommation (20) avec un gestionnaire du réseau électrique (10).

11. Dispositif de contrôle selon la revendication précédente, **caractérisé en ce que** le dispositif est intégré dans un compteur électrique communicant.

**Patentansprüche**

1. Verfahren zum Steuern eines Elektrizitätsverteilernetzes (10) an einer Verbrauchsstelle (20) des Elektrizitätsnetzes (10), wobei die Verbrauchsstelle (20) eine Elektrizitätsmenge (30) führen kann, die mit dem Elektrizitätsnetz (10) verbunden ist, wobei das Verfahren aufweist:

   - einen Schritt (41) zum Messen von elektrischen Spannungen an der Verbrauchsstelle (20),
   - einen Schritt (42, 43) zum Schätzen, an der Verbrauchsstelle (20), von Variablen, die einen Gleichgewichtszustand des Elektrizitätsnetzes (10) darstellen, aus den gemessenen elektrischen Spannungen, die darstellenden Variablen umfassend die Frequenz (f) und die zeitliche Frequenzschwankung (df/dt) des Elektrizitätsnetzes sowie die Differenz ($\Delta$P) zwischen der erzeugten elektrischen Leistung und der elektrischen Leistung, die in dem Elektrizitätsnetz verbraucht wird, wobei der Schätzschritt (42) zunächst eine Schätzung der Frequenz (f) des Elektrizitätsnetzes aus den Spannungen, die an der Verbrauchsstelle gemessen werden, und eine Schätzung der Frequenzschwankung (df/dt) des Elektrizitätsnetzes (10) vornimmt,
   - einen Steuerschritt (44), während dessen der Elektrizitätsverbrauch der Elektrizitätsmenge (30) geändert wird, wenn die geschätzten darstellenden Variablen außerhalb eines zuvor bestimmten Betriebsbereichs liegen,

**dadurch gekennzeichnet, dass**:

   - der Schätzschritt (43) in Echtzeit eine Schätzung der Differenz ($\Delta$P) zwischen der erzeugten elektrischen Leistung und der verbrauchten elektrischen Leistung vornimmt, unter Verwendung eines erweiterten Kalman-Filters, wobei eine der Zustandsvariablen ein Kalibrierungsparameter ($\alpha$) ist, der die Trägheit des Elektrizitätsnetzes (10) darstellt,
   - wobei das Steuerverfahren einen periodischen Neukalibrierungsschritt (46) aufweist, während dessen der Kalibrierungsparameter ($\alpha$) durch Kommunikation zwischen der Verbrauchsstelle (20) und einem Verwaltungsprogramm des Elektrizitätsnetzes periodisch aktualisiert wird, und während dessen Informationen zum Vorhersagen einer Abweichung zwischen der erzeugten Leistung und der verbrauchten Leis-

tung ($\Delta P_{vorhergesagt}$) durch das Netzverwaltungsprogramm bereitgestellt wird und in dem Steuerschritt (44) zum Bestimmen des zuvor bestimmten Betriebsbereichs verwendet wird.

2. Steuerverfahren nach Anspruch 1, **dadurch gekennzeichnet, dass** die Frequenzschätzung ein erweitertes Kalman-Filter verwendet und die Frequenzvariationsschätzung ebenfalls ein erweitertes Kalman-Filter verwendet.

3. Steuerverfahren nach Anspruch 1, **dadurch gekennzeichnet, dass** die Frequenzschätzung ein erweitertes Kalman-Filter in Redundanz mit einem System von der Art Phasenregelkreis verwendet.

4. Steuerverfahren nach Anspruch 1, **dadurch gekennzeichnet, dass** der zuvor bestimmte Betriebsbereich durch Schwellenwerte für die Variablen identifiziert wird, die den Gleichgewichtszustand des Netzes darstellen, wobei die Schwellenwerte während des periodischen Neukalibrierungsschrittes (46) aktualisiert werden.

5. Steuerverfahren nach Anspruch 1, **dadurch gekennzeichnet, dass** der zuvor bestimmte Betriebsbereich durch Schwellenwerte für die Variablen identifiziert wird, die den Gleichgewichtszustand des Netzes darstellen, wobei die Schwellenwerte voneinander abhängig sind.

6. Steuerverfahren nach einem der Ansprüche 1 bis 5, **dadurch gekennzeichnet, dass** während des Steuerschritts (44) der Elektrizitätsverbrauch der Elektrizitätsmenge (30) reduziert wird, wenn die Variablen, die den Gleichgewichtszustand darstellen, unterhalb des zuvor bestimmten Betriebsbereichs liegen.

7. Steuerverfahren nach Anspruch 6, **dadurch gekennzeichnet, dass** während des Steuerschritts (44) die Elektrizitätsmenge (30) von dem Elektrizitätsnetz (10) getrennt wird, wenn die Variablen, die den Gleichgewichtszustand darstellen, unterhalb des zuvor bestimmten Betriebsbereichs liegen.

8. Steuerverfahren nach einem der Ansprüche 1 bis 5, **dadurch gekennzeichnet, dass** während des Steuerschritts (44) der Elektrizitätsverbrauch der Elektrizitätsmenge (30) erhöht wird, wenn die Variablen, die den Gleichgewichtszustand darstellen, über dem zuvor bestimmten Betriebsbereich liegen.

9. Vorrichtung zum Steuern eines Elektrizitätsverteilernetzes (10), das in eine Verbrauchsstelle (20) des Elektrizitätsverteilernetzes (10) integriert ist, **dadurch gekennzeichnet, dass** die Vorrichtung Mittel (21) zum Messen von elektrischen Spannungen an der Verbrauchsstelle (20), eine Berechnungseinheit (22) zum Schätzen von Variablen, die einen Gleichgewichtszustand des Elektrizitätsnetzes darstellen, und Mittel (23) zum Steuern einer Elektrizitätsmenge (30) aufweist, die durch die Verbrauchsstelle (20) gesteuert werden, zwecks Implementierung des Steuerverfahrens nach einem der vorstehenden Ansprüche.

10. Steuervorrichtung nach dem vorstehenden Anspruch,
**dadurch gekennzeichnet, dass** die Vorrichtung auch Kommunikationsmittel (24) zum Kommunizierenlassen, über eine IoT-Plattform, der Verbrauchsstelle (20) mit einem Verwaltungsprogramm des Elektrizitätsnetzes (10) aufweist.

11. Steuervorrichtung nach dem vorstehenden Anspruch,
**dadurch gekennzeichnet, dass** die Vorrichtung in einen kommunizierenden Stromzähler integriert ist.

## Claims

1. Method for controlling an electricity distribution grid (10) at a consumption point (20) of the electricity grid (10), the consumption point (20) being able to manage an electrical load (30) connected to the electricity grid (10), the method comprising:

- a step (41) of measuring electrical voltages at the consumption point (20),
- a step (42, 43) of estimating, at the consumption point (20), variables which are representative of a state of equilibrium of the electricity grid (10) from the measured electrical voltages, the representative variables comprising the frequency (f) and the time-frequency variation (df/dt) of the electricity grid as well as the difference ($\Delta P$) between the electrical power produced and the electrical power consumed in the electricity grid, the estimation step (42) first estimating the frequency (f) of the electricity grid from the voltages measured at the consumption point and estimating the frequency variation (df/dt) of the electricity grid (10),
- a command step (44) during which the electricity consumption of the electrical load (30) is modified when the estimated representative variables are outside a predetermined operating range, **characterized in that:**

- the estimation step (43) estimates, in real time, the difference ($\Delta P$) between electrical power produced and electrical power consumed using an extended Kalman filter, of which one of the state variables is a calibra-

tion parameter ($\alpha$) representing the inertia of the electricity grid (10),
- the control method comprises a periodic recalibration step (46) during which the calibration parameter ($\alpha$) is periodically updated by communication between the consumption point (20) and an electricity grid operator and during which information ($\Delta P_{predicted}$) predicting a deviation between power produced and power consumed is provided by the electricity grid operator and is used in the command step (44) in order to determine the predetermined operating range.

2. Control method according to claim 1, **characterized in that** the frequency estimation uses an extended Kalman filter and the frequency variation estimation also uses an extended Kalman filter.

3. Control method according to claim 1, **characterized in that** the frequency estimation uses an extended Kalman filter in redundancy with a phase-locked loop system.

4. Control method according to claim 1, **characterized in that** the predetermined operating range is identified by thresholds for the variables which are representative of the state of equilibrium of the grid, the thresholds being updated during the periodic recalibration step (46).

5. Control method according to claim 1, **characterized in that** the predetermined operating range is identified by thresholds for the variables which are representative of the state of equilibrium of the grid, the thresholds being mutually interdependent.

6. Control method according to any of claims 1 to 5, **characterized in that,** during the command step (44), the electricity consumption of the electrical load (30) is reduced when the variables which are representative of the state of equilibrium are below the predetermined operating range.

7. Control method according to claim 6, **characterized in that,** during the command step (44), the electrical load (30) is disconnected from the electricity grid (10) when the variables which are representative of the state of equilibrium are below the predetermined operating range.

8. Control method according to any of claims 1 to 5, **characterized in that,** during the command step (44), the electricity consumption of the electrical load (30) is increased when the variables which are representative of the state of equilibrium are above the predetermined operating range.

9. Device for controlling an electricity distribution grid (10) which is integrated in a consumption point (20) of the electricity grid (10), **characterized in that** the device comprises means (21) for measuring electrical voltages at the consumption point (20), a computing unit (22) for estimating variables which are representative of a state of equilibrium of the electricity grid, and means (23) for commanding an electrical load (30) which is commanded by the consumption point (20), with the aim of carrying out the control method according to any of the preceding claims.

10. Control device according to the preceding claim, **characterized in that** the device also comprises communication means (24) for putting the consumption point (20) in communication with an electricity grid operator (10) via an IoT platform.

11. Control device according to the preceding claim, **characterized in that** the device is integrated into a communicating electricity meter.

[Fig. 1]

Fig 1

[Fig. 2]

Fig 2

**EP 4 302 378 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001103669 A
- US 2019379237 A1
- US 2015112501 A1